# FASCICULE DE BREVET EUROPEEN

(11) **EP 2 339 810 B1**
(45) Date de publication et mention de la délivrance du brevet: **03.10.2018**
(21) Numéro de dépôt: 10188142.3
(22) Date de dépôt: 20.10.2010
(51) Int. Cl.: H04L 29/06, H04L 29/08

(54) **Session applicative, session de service, et procédés mis en oeuvre pour établir une session applicative, gérer une session de service**
Anwendungssitzung, Dienstsitzung und Verfahren zur Erstellung einer Anwendungssitzung, und zur Verwaltung einer Dienstsitzung
Applicative session, service session and method in order to establish an applicative session and to administer a service session

(30) Priorité: 26.10.2009 FR 0957486
(43) Date de publication de la demande: 29.06.2011
(73) Titulaire: Orange, 75015 Paris (FR)
(72) Inventeur: Bröard, Gaël, 92260, FONTENAY-AUX-ROSES (FR); El Hafiani, Mohammed, 92130, ISSY-LES-MOULINEAUX (FR)

(56) Documents cités:
- WO-A1-2006/120303
- WO-A1-2007/025158

## Description

L'invention concerne une session applicative, une session de service, les procédés mis en oeuvre pour établir une session applicative, gérer une session de service, un dispositif serveur les mettant en oeuvre. L'invention est particulièrement intéressante dans le cadre du protocole SIP et des sessions applicatives de type SIPApplicationSession utilisant deux sessions de communication de type SIPSession.

Le protocole d'initialisation de session SIP est un protocole de commande de la couche d'application aussi appelée signalisation permettant la gestion de sessions avec un ou plusieurs utilisateurs d'un service. Ces sessions incluent les appels téléphoniques, la distribution de contenu et les téléconférences sur réseau IP ou Internet.

Le document WO2007025158 propose un exemple de session de service dans lequel un contrôleur de session vient vérifier les capacités dynamiques de l'équipement requérant une session de service d'accéder au service. Ce document prévoit une seule et unique session applicative entre l'équipement et la plateforme dont l'établissement est géré par le contrôleur.

De manière générale, si un service auquel un utilisateur A et un utilisateur B sont connectés souhaite mettre en relation ces deux utilisateurs, cela n'est aujourd'hui possible qu'en créant une nouvelle session applicative reliant les deux utilisateurs A et B et en perdant le contexte de chacun de leurs deux appels initiaux. Lorsque l'utilisateur A se connecte à un service, une session applicative est créée comportant deux sessions statiques de communication point à point l'une avec le terminal de l'utilisateur A l'autre avec le serveur fournisseur de service. De la même manière l'utilisateur B est connecté au service. Les techniques de gestion des sessions applicatives ne prévoient pas la mobilité de session de communication point à point entre deux sessions applicatives.

En effet, le mécanisme des applications SIP ne permet pas de déplacer une session de communication point à point SIP (SIPSession) depuis une session applicative (SIPApplicationSession) vers une autre session applicative. Ainsi, toutes fonctionnalités se basant sur différents types de transfert sont impossibles dans ce type de protocole. Les services proposés utilisant ce type de protocole se trouve alors limités dans leurs fonctionnalités.

Un des buts de la présente invention est de remédier aux insuffisances de l'état de la technique.

Un objet de l'invention est une session applicative comportant une première et une seconde sessions de communication,
- la première session de communication étant une session statique avec un équipement, et
- la seconde session de communication étant une session dynamique, ladite session dynamique étant apte à permettre un appel vers une seconde session de communication d'une deuxième session applicative.

Ainsi, la seconde session de communication étant dynamique, elle peut être modifiée sans clore la session applicative.

Un autre objet de l'invention est une session de service comportant une première et une deuxième sessions applicatives telles que mentionnées précédemment,
- la première session de communication de la première session applicative étant connectée à un premier équipement et
- la première session de communication de la deuxième session applicative étant connectée à un deuxième équipement.

Ainsi, la mobilité de la session de service est possible permettant d'ajouter des fonctions à cette session de service sans la fermer grâce à la seconde session de communication dynamique.

L'invention a pour objet un procédé d'établissement d'une session applicative avec un premier équipement d'un réseau de communication comportant la réception d'une invitation par un premier serveur d'application, ladite invitation étant apte à permettre l'établissement par ledit premier serveur d'application d'une première session applicative comportant
- une première session de communication statique avec ledit premier équipement et
- une deuxième session de communication dynamique apte à permettre un appel vers une seconde session de communication d'une deuxième session applicative.

Avantageusement, selon une implémentation de l'invention, les différentes étapes du procédé d'établissement d'une session applicative selon l'invention sont mises en oeuvre par un logiciel ou programme d'ordinateur, ce logiciel comprenant des instructions logicielles destinées à être exécutées par un processeur de données d'un dispositif faisant partie d'un dispositif serveur d'application et étant conçus pour commander l'exécution des différentes étapes de ce procédé.

L'invention vise donc aussi un programme comprenant des instructions de code de programme pour l'exécution des étapes du procédé d'établissement de session applicative lorsque ledit programme est exécuté par un processeur.

L'invention a aussi pour objet un procédé de gestion d'une session de service avec un premier équipement d'un réseau de communication, comportant la réception d'une invitation par un premier serveur d'application, ladite invitation étant apte à permettre l'établissement par ledit premier serveur d'une première session applicative avec un premier équipement comportant :
- une première session de communication statique avec ledit premier équipement et
- une seconde session de communication dynamique avec un deuxième serveur d'application, ledit deuxième serveur d'application étant apte à établir une deuxième session applicative avec un deuxième équipement.

Avantageusement, le procédé de gestion comporte la réception d'une nouvelle invitation d'un troisième serveur d'application par ledit premier serveur d'application, ladite nouvelle invitation étant apte à permettre, après déconnexion de la seconde session de communication dynamique dudit deuxième serveur d'application, la connexion de ladite seconde session de communication dynamique avec ledit troisième serveur d'application, ledit troisième serveur d'application étant apte à établir une deuxième session applicative avec un troisième équipement.

Ainsi, la session de service est déplacée d'un deuxième vers un troisième équipement. Par exemple, lors d'une conférence téléphonique, deux utilisateurs connectés au service de conférence seront mis en relation directe.

Avantageusement, selon une implémentation de l'invention, les différentes étapes du procédé de gestion d'une session de service selon l'invention sont mises en oeuvre par un logiciel ou programme d'ordinateur, ce logiciel comprenant des instructions logicielles destinées à être exécutées par un processeur de données d'un dispositif faisant partie d'un dispositif serveur d'application et étant conçus pour commander l'exécution des différentes étapes de ce procédé.

L'invention vise donc aussi un programme comprenant des instructions de code de programme pour l'exécution des étapes du procédé de gestion de session de service lorsque ledit programme est exécuté par un processeur.

L'invention a également pour objet un dispositif serveur d'application comportant des moyens de gestion d'une session applicative, lesdits moyens de gestion comportant des premiers moyens de gestion d'une session de communication statique apte à être connectés à un premier équipement, des seconds moyens de gestion d'une session de communication dynamique apte à établir un appel vers un deuxième serveur d'application.

Avantageusement, ledit dispositif serveur d'application comporte des moyens de transfert de session apte à commander lesdits seconds moyens de gestion d'un serveur d'application, ladite commandé des moyens de transfert étant apte à déclencher le déplacement par lesdits seconds moyens de gestion dudit appel vers un troisième serveur d'application.

Un objet de l'invention est un procédé de connexion d'un premier équipement à une session de service comportant l'émission d'une invitation dudit premier équipement à un premier serveur d'application, ladite invitation étant apte à permettre l'établissement d'une première session applicative avec ledit équipement comportant :
- une première session de communication statique avec ledit premier équipement et
- une seconde session de communication dynamique avec un deuxième serveur d'application, ledit deuxième serveur d'application étant apte à établir une deuxième session applicative avec un deuxième équipement.

Avantageusement, selon une implémentation de l'invention, les différentes étapes du procédé de connexion d'un premier équipement à une session de service selon l'invention sont mises en oeuvre par un logiciel ou programme d'ordinateur, ce logiciel comprenant des instructions logicielles destinées à être exécutées par un processeur de données d'un dispositif faisant partie d'un équipement et étant conçus pour commander l'exécution des différentes étapes de ce procédé.

L'invention vise donc aussi un programme comprenant des instructions de code de programme pour l'exécution des étapes du procédé de connexion lorsque ledit programme est exécuté par un processeur.

Ces programmes peuvent utiliser n'importe quel langage de programmation et être sous la forme de code source, code objet ou code intermédiaire entre code source te code objet tel que dans une forme partiellement compilée ou dans n'importe quelle autre forme souhaitable.

Un autre objet de l'invention est un équipement d'un réseau de communication comportant des moyens de connexion à une session de service apte à émettre une invitation à un premier serveur d'application, ladite invitation étant apte à permettre l'établissement d'une première session applicative avec ledit équipement comportant :
- une première session de communication statique avec ledit premier équipement et
- une seconde session de communication dynamique avec un deuxième serveur d'application, ledit deuxième serveur d'application étant apte à établir une deuxième session applicative avec un deuxième équipement.

Les caractéristiques et avantages de l'invention apparaîtront plus clairement à la lecture de la description, faite à titre d'exemple, et des figures s'y rapportant qui représentent :
- Figures 1A et 1B, des schémas simplifiés de sessions selon l'art antérieur, respectivement un schéma de sessions de deux équipements d'un réseau connectés lors d'une communication selon l'art antérieur, et un schéma de transfert de sessions de communication d'un des deux équipements vers un autre équipement selon l'art antérieur,
- Figure 2, un schéma simplifié d'une session de service selon l'invention,
- Figure 3, un schéma simplifié d'un exemple de transfert de sessions selon l'invention,
- Figure 4, un schéma simplifié d'un autre exemple de transfert de sessions selon l'invention,
- Figure 5, un exemple d'échanges lors de l'établissement d'une session de service puis de la mobilité d'une session de service selon l'invention.

L'invention sera illustrée dans le cadre de session basée sur le protocole SIP. De manière générale, l'invention sera avantageusement utilisée dans le cadre de session applicative et/ou de session de service basé sur un protocole de signalisation ou d'initialisation de session générant des sessions applicatives qui ne peuvent être déplacée.

Les termes « Session applicative » (Application Session), « session de communication » (Session), sont entendus tels que définis par la norme JSR289. Notamment, le terme « session de communication » représente une liaison point à point. Le terme « session applicative » désigne une session associée à une application permettant à la fois de corréler plusieurs sessions protocolaires et permet de stocker des données de l'application. Une « session applicative » comporte deux sessions de communication chacune vers un équipement, terminal ou serveur (notamment serveur de contenus).

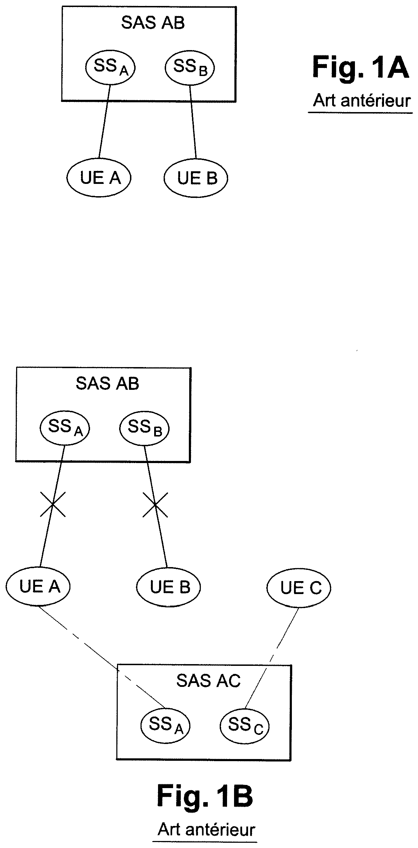

La figure 1A illustre un schéma de sessions de service de deux équipements d'un réseau connectés lors d'une communication selon l'art antérieur.

Un premier équipement UE A d'un premier utilisateur souhaitant dialoguer avec un deuxième utilisateur possédant un deuxième équipement UE B lors d'un service de communication, par exemple un service de visiocommunication, fourni par un serveur fournisseur de service S (non illustré), demande l'établissement d'une session de service avec ce serveur fournisseur de service S. Cette session de service est constituée par une session applicative SAS AB comportant deux sessions de communication statiques: une session de communication SS_{A} avec le premier équipement UE A et une session de communication SS_{B} avec le deuxième équipement UE B.

Par « session statique » est entendue une session de communication d'une session applicative qui est maintenue durant toute la durée de la session applicative.

La session de service ainsi établie ne peut pas être déplacée. La figure 1B illustre un schéma de transfert de session de service selon l'art antérieur. Lorsque dans le contexte de la figure 1A, la mise en relation des utilisateurs A et C est déclenchée, la session de service des utilisateurs A et B constituées par la session applicative SAS AB est close et une nouvelle session de service constituée par une nouvelle session applicative SAS AC est établie entre les équipements UE A et UE C. La nouvelle session applicative SAS AC comporte, elle aussi, deux sessions de communication statiques: une nouvelle session de communication SS_{A} avec le premier équipement UE A et une nouvelle session de communication SS_{C} avec un troisième équipement UE C de l'utilisateur C.

En effet, dans le cas de sessions de communication SIPSession et de sessions applicatives SIPApplicationSession, lorsque la connexion des premier et troisième équipements UE A et UE C est déclenchée selon la SIPServlet 1.0 et 1.1 (JSR116 et 289), la session applicative existante est close pour établir une nouvelle session applicative entre les deux équipements UE A et UE C. Par conséquent, les contextes de chacun de la session de service initiale SAS AB n'est pas conservé.

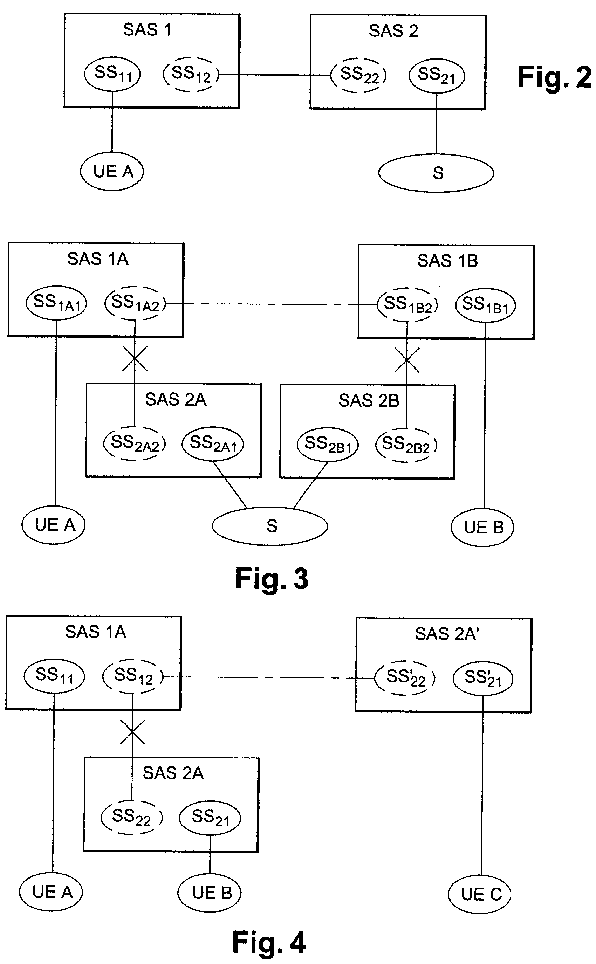

La figure 2 illustre un schéma simplifié d'une session de service selon l'invention.

Une session applicative SAS 1, respectivement SAS 2, selon l'invention comporte deux sessions de communication: une première session de communication statique SS₁₁, respectivement S₂₁, avec un équipement UE A, respectivement S et une seconde session de communication dynamique SS₁₂, respectivement S₂₂, apte à permettre d'établir un appel avec une autre session applicative SAS 2, respectivement SAS 1.

Par « session dynamique » est entendue une session de communication d'une première session applicative avec une deuxième session applicative. Cette session est dite dynamique car elle est apte à être déplacée vers une troisième session application.

Une session de service permettant à un équipement UE A d'accéder à un service fourni par un serveur fournisseur de service S comporte alors deux sessions applicatives SAS 1 et SAS 2:
- une première session applicative SAS 1 comportant une première session de communication statique SS₁₁ avec l'équipement UE A, et une seconde session de communication dynamique SS₁₂ apte à permettre d'établir un appel avec la deuxième session applicative SAS 2, et
- une deuxième session applicative SAS 2 comportant une première session de communication statique S₂₁, avec un équipement comportant un serveur fournisseur de service S et une seconde session de communication dynamique S₂₂ apte à permettre d'établir l'appel en collaboration avec la seconde session de communication dynamique SS₁₂ de la première session applicative SAS 1.

La figure 3 illustre un schéma simplifié d'un exemple de transfert de sessions selon l'invention,

Une session de service permettant à un premier équipement UE A d'accéder à un service fourni par un deuxième équipement : un serveur fournisseur de service S comporte deux sessions applicatives SAS 1A et SAS 2A, comme illustré par la figure 2:
- une première session applicative SAS 1A comportant une première session de communication statique SS_{1A1} avec le premier équipement UE A, et une seconde session de communication dynamique SS_{1A2} apte à permettre d'établir un appel avec la deuxième session applicative SAS 2A, et
- une deuxième session applicative SAS 2A comportant une première session de communication statique S_{2A1}, avec un deuxième équipement comportant un serveur fournisseur de service S et une seconde session de communication dynamique S_{2A2} apte à permettre d'établir l'appel en collaboration avec la seconde session de communication dynamique SS_{1A2} de la première session applicative SAS 1A.

De la même manière, une session de service permet à un troisième équipement UE B d'accéder au service fourni par le serveur fournisseur de service S. La session de service pour le troisième équipement UE B comporte alors deux sessions applicatives SAS 1B et SAS 2B:
- une première session applicative SAS 1B comportant une première session de communication statique SS_{1B1} avec le troisième équipement UE B, et une seconde session de communication dynamique SS_{1B2} apte à permettre d'établir un appel avec la deuxième session applicative SAS 2B, et
- une deuxième session applicative SAS 2B comportant une première session de communication statique S_{2B1}, avec le deuxième équipement comportant le serveur fournisseur de service S et une seconde session de communication dynamique S_{2B2} apte à permettre d'établir l'appel en collaboration avec la seconde session de communication dynamique SS_{1B2} de la première session applicative SAS 1B.

Lorsqu'un serveur, notamment le serveur fournisseur de service S, déclenche une mobilité du service vers la mise en relation directe du premier équipement UE A avec le troisième équipement UE B, alors, selon l'invention, l'appel de la première session applicative SAS 1A du premier équipement UE A vers la deuxième session applicative SAS 2A au serveur S est déplacée vers une deuxième session applicative correspondant à la première session applicative SAS 1B du troisième équipement UE B. Ainsi, les appels constitués par des liens dynamiques entre les secondes sessions de communications SS_{1A2} et SS_{2A2}, respectivement SS_{1B2} et SS_{2B2}, des premières et deuxièmes sessions applicatives SAS 1A et SAS 2A, respectivement SAS 1B et SAS 2B, sont clos. Et un nouvel appel est établi entre les secondes sessions de communications SS_{1A2} et SS_{1B2}, des premières sessions applicatives SAS 1A et SAS 1B.

Ainsi, par exemple, deux utilisateurs A et B participant à une téléconférence ou un chat géré par un serveur S peuvent à la demande d'au moins l'un d'entre eux ou sur décision du serveur S (en fonction de règles préétablie ou par instruction d'un chairman) être mis en relation directe pour continuer une conversation commencée dans la téléconférence mais n'intéressant pas les autres conférenciers.

Un autre alternative est, que le serveur gérant plusieurs conférences, décide au vu du sujet de conversation d'un utilisateur, notamment de ces demandes, grâce par exemple à la détection de mots clés, lui proposer de basculer dans une conférence dont le sujet lui sera plus adapté sans perdre le contexte de son appel.

Une autre alternative est que le troisième équipement est un deuxième serveur. Ainsi, si le premier serveur S fournit un service de serveur vocal et le deuxième serveur un service de conférence, un premier utilisateur cherchant à joindre un deuxième utilisateur en conférence téléphonique tombe sur son serveur vocal, suivant le sujet abordé dans le message qu'il laisse, un serveur (le serveur vocal et/ou le serveur de conférence et/ou un serveur de gestion de ce type de déplacement de session) peut déclencher l'entrée du premier utilisateur dans la conférence à laquelle le deuxième utilisateur participe.

Dans un mode de réalisation particulier non illustré, l'invention permet d'envisager, lorsque deux équipements UE A et UE B sont en communication comme l'illustre le lien dynamique en tiret-cadratin de la figure 3 entre la première session applicative SAS 1A du premier équipement UE A et une deuxième session applicative correspondant à la première session applicative SAS 1B du troisième équipement UE B, de déclencher l'ouverture d'une téléconférence gérée par un serveur S tel que celui illustré sur la figure 3 et de basculer les deux équipements UE A et UE B dans cette conférence en clôturant ce lien dynamique en tiret cadratin et en reliant les deux équipements UE A et UE B à ce serveur S grâce respectivement grâce à deux appels constitués par des liens dynamiques entre les secondes sessions de communications SS_{1A2} et SS_{2A2}, respectivement SS_{1B2} et SS_{2B2}, des premières et deuxièmes sessions applicatives SAS 1A et SAS 2A constituant la session de service du premier équipement UE A avec le serveur S, respectivement SAS 1B et SAS 2B constituant la session de service du troisième équipement UE B avec le serveur S.

Il pourrait ainsi être envisagé de joindre d'autres participants à la conversation entre les utilisateurs A et B sans pour autant perdre les contextes des appels des premier et troisième équipements UE A et UE B des utilisateurs respectifs A et B.

La figure 4 illustre un schéma simplifié d'un autre exemple de transfert de sessions selon l'invention.

Une session de service permettant à un premier équipement UE A de communiquer avec un deuxième équipement UE B comporte deux sessions applicatives SAS 1A et SAS 2A, comme illustré par la figure 2:
- une première session applicative SAS 1A comportant une première session de communication statique SS₁₁ avec le premier équipement UE A, et une seconde session de communication dynamique SS₁₂ apte à permettre d'établir un appel avec la deuxième session applicative SAS 2A, et
- une deuxième session applicative SAS 2A comportant une première session de communication statique S₂₁, avec un deuxième équipement UE B et une seconde session de communication dynamique S₂₂ apte à permettre d'établir l'appel en collaboration avec la seconde session de communication dynamique SS₁₂ de la première session applicative SAS 1A.

Lorsqu'un serveur, notamment un serveur fournisseur de service S (non illustré sur cette figure), déclenche une mobilité du service vers la mise en relation avec un troisième équipement UE C, notamment à la demande de l'un des premier et/ou deuxième équipement UE A et UE B, alors, selon l'invention, l'appel de la première session applicative SAS 1A du premier équipement UE A vers la deuxième session applicative SAS 2A au deuxième équipement UE B est déplacée vers une nouvelle deuxième session applicative SAS 2A' au troisième équipement UE C. Ainsi, l'appel constitué par un lien dynamique entre les secondes sessions de communications SS₁₂ et SS₂₂, des première et deuxième sessions applicatives SAS 1A et SAS 2A sont clos. Et un nouvel appel est établi entre les secondes sessions de communications SS₁₂ et SS'₂₂, des premières sessions applicatives SAS 1A et SAS 2A'.

La deuxième session applicative SAS 2A' au troisième équipement UE C comporte une première session de communication statique S'₂₁, avec le troisième équipement UE C et la seconde session de communication dynamique S'₂₂ apte à permettre d'établir l'appel en collaboration avec la seconde session de communication dynamique SS₁₂ de la première session applicative SAS 1A.

Ainsi dans certains services de type rencontres express (speed dating en anglais), un premier utilisateur peut être facilement déplacé d'un interlocuteur à un autre sans limite en nombre que les utilisateurs ayant souscrit au service et ceci en gardant le tout premier appel qu'il aura passé.

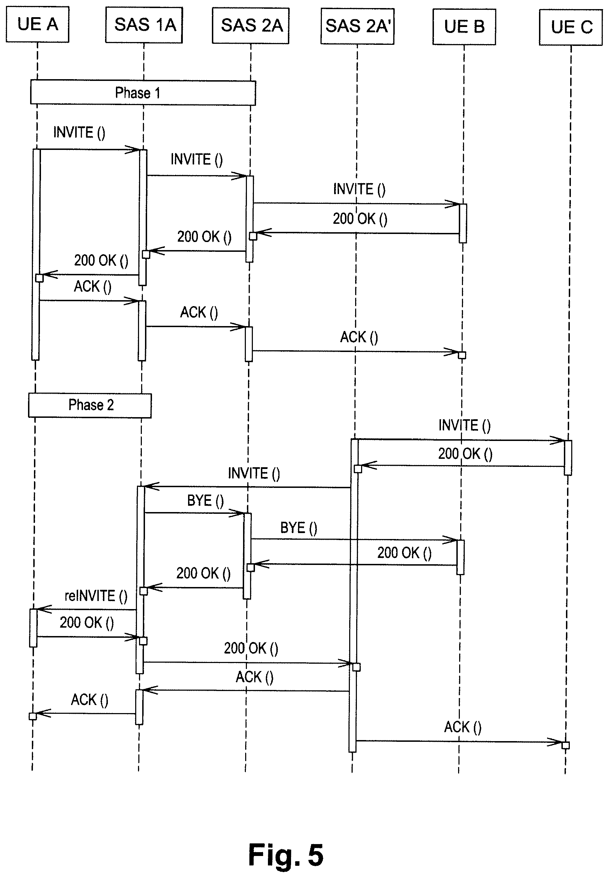

La figure 5 illustre un exemple d'échanges lors de l'établissement d'une session de service puis de la mobilité d'une session de service selon l'invention.

Dans la phase 1 de la figure 5, un utilisateur A à l'aide d'un premier équipement UE A émet un appel et un serveur S (non illustré) connecte ce premier équipement UE A à un deuxième équipement UE B d'un utilisateur B.

La figure 5 donne un exemple des échanges lors de cette phase 1, le premier équipement UE A envoie une invitation à établir une session de service à une première session application SAS 1A (en particulier à une première session de communication statique telle que SS₁₁ illustrée par la figure 4). La première session applicative SAS 1A (en particulier une seconde session de communication dynamique telle que SS₁₂ illustrée par la figure 4) transmet cette invitation à une deuxième session applicative SAS 2A (en particulier une seconde session de communication dynamique telle que SS₂₂ illustrée par la figure 4). La deuxième session applicative SAS 2A (en particulier à une première session de communication statique telle que SS₂₁ illustrée par la figure 4) transmet cette invitation à un deuxième équipement UE B destinataire.

L'appel entre les première et deuxième sessions applicatives SAS 1A et SAS 2A est, en particulier, un lien SIP dynamique.

Dans un mode de réalisation particulier, la session de service est établie lorsque chaque élément de la chaine d'invitation a approuvé l'invitation (notamment par un message SIP du type 200 OK).

Dans un mode de réalisation particulier, la session de service est établie lorsque chaque élément de la chaine d'invitation a accusé réception de l'approbation de l'invitation (notamment par un message SIP du type ACK.

Dans la phase 2 de la figure 5, le serveur S décide de déplacer l'appel du premier équipement UE A de l'utilisateur A vers un troisième équipement UE C d'un utilisateur C notamment sur commande externe.

La figure 5 donne un exemple des échanges lors de cette phase 2, une nouvelle deuxième session applicative SAS 2A' est établie qui (en particulier à une première session de communication statique telle que SS'₂₁ illustrée par la figure 4) envoie une invitation à établir une session de service au troisième équipement UE C.

Dans un mode de réalisation particulier, la nouvelle deuxième session applicative SAS 2A' est établie lorsque le troisième équipement UE C a approuvé l'invitation (notamment par un message SIP du type 200 OK).

La nouvelle deuxième session applicative SAS 2A' (en particulier une seconde session de communication dynamique telle que SS'₂₂ illustrée par la figure 4) transmet alors cette invitation à la première session applicative SAS 1A (en particulier une seconde session de communication dynamique telle que SS₁₂ illustrée par la figure 4).

Cela déclenche la clôture de l'appel existant (en particulier la coupure du lien SIP dynamique) entre les première et deuxième sessions applicatives SAS 1A et SAS 2A, notamment par la transmission de message BYE de la première session applicative (en particulier une seconde session de communication dynamique telle que SS₁₂ illustrée par la figure 4) à la deuxième session applicative SAS 2A (en particulier une seconde session de communication dynamique telle que SS₂₂ illustrée par la figure 4). La deuxième session applicative SAS 2A (en particulier à une première session de communication statique telle que SS₂₁ illustrée par la figure 4) transmet cette demande de clôture au deuxième équipement UE B.

Suite à la clôture de cet appel, la première session applicative SAS 1A (en particulier à une première session de communication statique telle que SS₁₁ illustrée par la figure 4) envoie une réinvitation (notamment par un message SIP de type ReINVITE) au premier équipement UE A.

Dans un mode de réalisation particulier, la session de service est établie lorsque chaque élément de la chaine d'invitation à approuver l'invitation (notamment par un message SIP du type 200 OK).

Dans un mode de réalisation particulier, la session de service est établie lorsque chaque élément de la chaine d'invitation à accusé réception de l'approbation de l'invitation (notamment par un message SIP du type ACK.

Un mode de réalisation particulier non illustré est un serveur S mettant en oeuvre un procédé pour gérer une session de service.

Un autre mode de réalisation particulier non illustré est deux serveurs S et S' mettant chacun en oeuvre un procédé pour établir une session applicative, l'un des deux serveurs S ou S' voir un autre serveur S" mettant en oeuvre pour gérer une session de service utilisant une première session applicative établie par le serveur S et un deuxième session applicative établie par le serveur S'. Le lien dynamique entre les premières sessions applicatives est alors supporté par des moyens de connexion du serveur S avec le serveur S'.

L'invention vise aussi un support d'information comportant un ou plusieurs des programmes selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. LE programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessous. Un composant matériel correspond à tout élément d'un ensemble matériel (ou hardware) apte à mettre en oeuvre une fonction ou un ensemble de fonctions.

L'invention est avantageusement utilisée dans le cadre de services vocaux et de téléconférences avancées.

## Revendications

1. Session applicative **caractérisé en ce que** ladite session applicative (SAS 1, SAS 2, SAS 1A, SAS 1B, SAS 2A, SAS 2B, SAS 2A') comporte une première (SS₁₁, SS₂₁, SS_{1A1}, SS_{1B1}, SS_{2A1}, SS_{2B1}, SS'₂₁) et une seconde sessions de communication (SS₁₂, SS_{1A2}, SS_{1B2}, SS₂₂, SS_{2A2}, SS_{2B2}),
• la première session de communication (SS₁₁, SS₂₁, SS_{1A1}, SS_{1B1}, SS_{2A1}, SS_{2B1}, SS'₂₁) étant une session statique avec un équipement (UE A, S, UE B, UE C), et
• la seconde session de communication (SS₁₂, SS₂₂, SS_{1A2}, SS_{1B2}, SS_{2A2}, SS_{2B2}, SS'₂₂) étant une session dynamique, ladite session dynamique étant apte à permettre un appel vers une seconde session de communication (SS₂₂, SS₁₂, SS_{2A2}, SS_{1B2}, SS_{2B2}, SS_{1A2}) d'une deuxième session applicative (SAS 2, SAS2A, SAS 2B, SAS 1, SAS 1A, SAS 1B).

2. Session de service comportant une première (SAS 1, SAS 1A, SAS 1B) et une deuxième (SAS 2, SAS 2A, SAS 1B, SAS 2B, SAS 2A') sessions applicatives selon la revendication précédente,
• la première session de communication (SS₁₁, SS_{1A1}, SS_{1B1,}) de la première session applicative (SAS 1, SAS 1A, SAS 1B) étant connectée à un premier équipement (UE A, UE B) et
• la première session de communication (SS₂₁, SS_{2A1}, SS_{2B1}, SS_{1B1}, SS'₂₁) de la deuxième session applicative (SAS 2, SAS 2A, SAS 1B, SAS 2B) étant connectée à un deuxième équipement (S, UE B, UE C).

3. Procédé d'établissement d'une session applicative avec un premier équipement (UE A, UE B) d'un réseau de communication, **caractérisé en ce que** ledit procédé d'établissement comporte la réception d'une invitation (INVITE) par un premier serveur d'application, ladite invitation étant apte à permettre l'établissement par ledit premier serveur d'application d'une première session applicative (SAS 1, SAS 1A, SAS 1B) comportant :
• une première session de communication (SS₁₁, SS_{1A1}, SS_{1B1,}) statique avec ledit premier équipement (UE A, UE B) et
• une deuxième session de communication (SS₁₂, SS_{1A2}, SS_{1B2}) dynamique apte à permettre un appel vers une seconde session de communication (SS₂₂, SS_{2A2}, SS_{1B2}, SS_{2B2}, SS'₂₂) d'une deuxième session applicative (SAS 2, SAS 2A, SAS 1B, SAS 2B, SAS 2A').

4. Programme comprenant des instructions de code de programme pour l'exécution des étapes du procédé d'établissement de session applicative selon la revendication précédente lorsque ledit programme est exécuté par un processeur.

5. Procédé de gestion d'une session de service avec un premier équipement (UE A, UE B, UE C) d'un réseau de communication, **caractérisé en ce que** ledit procédé de gestion comporte la réception d'une invitation (INVITE) par un premier serveur d'application, ladite invitation étant apte à permettre l'établissement par ledit serveur d'application d'une première session applicative (SAS 1, SAS 1A, SAS 1B, SAS 2A') avec un premier équipement comportant :
• une première session de communication (SS₁₁, SS_{1A1}, SS_{1B1}, SS'₂₁) statique avec ledit premier équipement (UE A, UE B, UE C) et
• une seconde session de communication (SS₁₂, SS_{1A2}, SS_{1B2}, SS'₂₂) dynamique avec un deuxième serveur d'application, ledit deuxième serveur d'application étant apte à établir une deuxième session applicative (SAS 2, SAS 2A, SAS 1B, SAS 2B, SAS 2A') avec un deuxième équipement (S, UE B, UE C).

6. Procédé de gestion selon la revendication précédente **caractérisé en ce que** ledit procédé de gestion comporte la réception d'une nouvelle invitation (INVITE) d'un troisième serveur d'application par ledit premier serveur d'application, ladite nouvelle invitation étant apte à permettre, après déconnexion (BYE) de la seconde session de communication dynamique dudit deuxième serveur d'application, la connexion de ladite seconde session de communication dynamique avec ledit troisième serveur d'application, ledit troisième serveur étant apte à établir une deuxième session applicative (SAS 2A') avec un troisième équipement (UE C).

7. Programme comprenant des instructions de code de programme pour l'exécution des étapes du procédé de gestion de session de service selon l'une quelconque des revendications 5 ou 6 lorsque ledit programme est exécuté par un processeur.

8. Dispositif serveur d'application **caractérisé en ce que** ledit dispositif serveur d'application comporte des moyens de gestion d'une session applicative (SAS1, SAS 2, SAS 1A, SAS 1B, SAS 2A, SAS 2A'), lesdits moyens de gestion comportant :
• des premiers moyens de gestion d'une session de communication (SS₁₁, SS₂₁, SS_{1A1}, SS₁₈₁, SS_{2A1}, SS_{2B1}, SS'₂₁) statique apte à être connectés à un premier équipement (UE A, S, UE B, UE C),
• des seconds moyens de gestion d'une session de communication (SS₁₂, SS₂₂, SS_{1A2}, SS_{1B2}, SS_{2A2}, SS_{2B2}, SS'₂₂) dynamique apte à établir un appel vers un deuxième serveur d'application.

9. Dispositif serveur selon la revendication précédente **caractérisé en ce que** ledit dispositif serveur comporte des moyens de transfert de session apte à commander lesdits seconds moyens de gestion d'un serveur d'application, ladite commande des moyens de transfert étant apte à déclencher le déplacement par lesdits seconds moyens de gestion dudit appel vers un troisième serveur d'application.

10. Procédé de connexion d'un premier équipement à une session de service **caractérisé en ce que** ledit procédé de connexion comporte l'émission d'une invitation (INVITE) dudit premier équipement (UE A, UE B, UE C) à un premier serveur d'application, ladite invitation étant apte à permettre l'établissement d'une première session applicative (SAS 1, SAS 1A, SAS 1B, SAS 2A') avec ledit équipement comportant :
• une première session de communication statique (SS₁₁, SS_{1A1}, SS_{1B1}, SS'₂₁) avec ledit premier équipement (UE A, UE B, UE C) et
• une seconde session de communication (SS₁₂, SS_{1A2}, SS_{1B2}, SS'₂₂) dynamique avec un deuxième serveur d'application, ledit deuxième serveur d'application étant apte à établir une deuxième session applicative (SAS 2, SAS 2A, SAS 1B, SAS 2B, SAS 2A') avec un deuxième équipement (S, UE B, UE C).

11. Programme comprenant des instructions de code de programme pour l'exécution des étapes du procédé de connexion selon la revendication précédente lorsque ledit programme est exécuté par un processeur.

12. Equipement d'un réseau de communication **caractérisé en ce que** ledit équipement (UE A, UE B, UE C, S) comporte des moyens de connexion à une session de service apte à émettre une invitation à un premier serveur d'application, ladite invitation étant apte à permettre l'établissement d'une première session applicative avec ledit équipement comportant :
• une première session de communication (SS₁₁, SS₂₁, SS_{1A1}, SS_{2A1}, SS_{1B1}, SS_{2B1}, SS'₂₁) statique avec ledit premier équipement (UE A, UE B, UE C, S) et
• une seconde session de communication (SS₁₂, SS₂₂, SS_{1A2}, SS_{2A2}, SS_{1B2}, SS_{2B2}, SS'₂₂) dynamique avec un deuxième serveur d'application, ledit deuxième serveur d'application étant apte à établir une deuxième session applicative (SAS 2, SAS 2A, SAS 1B, SAS 2B, SAS 2A') avec un deuxième équipement (S, UE A, UE B, UE C).

## Patentansprüche

1. Anwendungssitzung, **dadurch gekennzeichnet, dass** die Anwendungssitzung (SAS 1, SAS 2, SAS 1A, SAS 1B, SAS 2A, SAS 2B, SAS 2A') eine erste (SS₁₁, SS₂₁, SS_{1A1}, SS_{1B1}, SS_{2A1}, SS_{2B1}, SS'₂₁) und eine zweite Kommunikationssitzung (SS₁₂, SS_{1A2}, SS_{1B2}, SS₂₂, SS_{2A2}, SS_{2B2}) umfasst,
• wobei die erste Kommunikationssitzung (SS₁₁, SS₂₁, SS_{1A1}, SS_{1B1}, SS_{2A1}, SS_{2B1}, SS'₂₁) eine statische Sitzung mit einer Ausrüstung (UE A, S, UE B, UE C) ist, und
• wobei die zweite Kommunikationssitzung (SS₁₂, SS₂₂, SS_{1A2}, SS_{1B2}, SS_{2A2}, SS_{2B2}, SS'₂₂) eine dynamische Sitzung ist, wobei die dynamische Sitzung geeignet ist, einen Anruf zu einer zweiten Kommunikationssitzung (SS₂₂, SS₁₂, SS_{2A2}, SS_{1B2}, SS_{2B2}, SS_{1A2}) einer zweiten Anwendungssitzung (SAS 2, SAS 2A, SAS 2B, SAS 1, SAS 1A, SAS 1B) zu ermöglichen.

2. Dienstsitzung, umfassend eine erste (SAS 1, SAS 1A, SAS 1B) und eine zweite (SAS 2, SAS 2A, SAS 1B, SAS 2B, SAS 2A') Anwendungssitzung nach dem vorhergehenden Anspruche,
• wobei die erste Kommunikationssitzung (SS₁₁, SS_{1A1}, SS_{1B1}) der ersten Anwendungssitzung (SAS 1, SAS 1A, SAS 1B) an eine erste Ausrüstung (UE A, UE B) angeschlossen ist, und
• wobei die erste Kommunikationssitzung (SS₂₁, SS_{2A1}, SS_{2B1}, SS_{1B1}, SS'₂₁) der zweiten Anwendungssitzung (SAS 2, SAS 2A, SAS 1B, SAS 2B) an eine zweite Ausrüstung (S, UE B, UE C) angeschlossen ist.

3. Verfahren zur Erstellung Anwendungssitzung (UE A, UE B) eines Kommunikationsnetzes, **dadurch gekennzeichnet, dass** das Erstellungsverfahren den Empfang einer Einladung (INVITE) durch einen ersten Anwendungsserver umfasst, wobei die Einladung geeignet ist, die Erstellung einer ersten Anwendungssitzung (SAS 1, SAS 1A, SAS 1B) durch den ersten Anwendungsserver zu ermöglichen, umfassend:
• eine erste statische Kommunikationssitzung (SS₁₁, SS_{1A1}, SS_{1B1}) mit der ersten Ausrüstung (UE A, UE B) und
• eine zweite dynamische Kommunikationssitzung (SS₁₂, SS_{1A2}, SS_{1B2}), die geeignet ist, einen Anruf zu einer zweiten Kommunikationssitzung (SS₂₂, SS_{2A2}, SS_{1B2}, SS_{2B2}, SS'₂₂) einer zweiten Anwendungssitzung (SAS 2, SAS 2A, SAS 1B, SAS 2B, SAS 2A') zu ermöglichen.

4. Programm, umfassend Programmcodeanweisungen für die Ausführung der Schritte des Verfahrens zur Erstellung einer Anwendungssitzung nach dem vorhergehenden Anspruch, wenn das Programm von einem Prozessor ausgeführt wird.

5. Verfahren zur Verwaltung einer Dienstsitzung mit einer ersten Ausrüstung (UE A, UE B, UE C) eines Kommunikationsnetzes, **dadurch gekennzeichnet, dass** das Verwaltungsverfahren den Empfang einer Einladung (INVITE) durch einen ersten Anwendungsserver umfasst, wobei die Einladung geeignet ist, die Erstellung einer ersten Anwendungssitzung (SAS 1, SAS 1A, SAS 1B, SAS 2A') durch den ersten Anwendungsserver mit einer ersten Ausrüstung zu ermöglichen, umfassend:
• eine erste statische Kommunikationssitzung (SS₁₁, SS_{1A1}, SS_{1B1}, SS'₂₁) mit der ersten Ausrüstung (UE A, UE B, UE C) und
• eine zweite dynamische Kommunikationssitzung (SS₁₂, SS_{1A2}, SS_{1B2}, SS'₂₂) mit einem zweiten Anwendungsserver, wobei der zweite Anwendungsserver geeignet ist, eine zweite Anwendungssitzung (SAS 2, SAS 2A, SAS 1B, SAS 2B, SAS 2A') mit einer zweiten Ausrüstung (S, UE B, UE C) zu ermöglichen.

6. Verwaltungsverfahren nach dem vorhergehenden Anspruch, **dadurch gekennzeichnet, dass** das Verwaltungsverfahren den Empfang einer neuen Einladung (INVITE) von einem dritten Anwendungsserver durch den ersten Anwendungsserver umfasst, wobei die neue Einladung geeignet ist, nach der Trennung (BYE) der zweiten dynamischen Kommunikationssitzung von dem zweiten Anwendungsserver den Anschluss der zweiten dynamischen Kommunikationssitzung mit dem dritten Anwendungsserver zu ermöglichen, wobei der dritte Server geeignet ist, eine zweite Anwendungssitzung (SAS 2A') mit einer dritten Ausrüstung (UE C) zu erstellen.

7. Programm, umfassend Programmcodeanweisungen für die Ausführung der Schritte des Verfahrens zur Verwaltung einer Dienstsitzung nach einem der Ansprüche 5 oder 6, wenn das Programm von einem Prozessor ausgeführt wird.

8. Anwendungsservervorrichtung, **dadurch gekennzeichnet, dass** die Anwendungsservervorrichtung Mittel zur Verwaltung einer Anwendungssitzung (SAS 1, SAS 2, SAS 1A, SAS 1B, SAS 2A, SAS 2A') umfasst, wobei die Verwaltungsmittel umfassen:
• erste Mittel zur Verwaltung einer statischen Kommunikationssitzung (SS₁₁, SS₂₁, SS_{1A1}, SS_{1B1}, SS_{2A1}, SS_{2B1}, SS'₂₁), die geeignet sind, an eine erste Ausrüstung (UE A, S, UE B, UE C) angeschlossen zu werden,
• zweite Mittel zur Verwaltung einer dynamischen Kommunikationssitzung (SS₁₂, SS₂₂, SS_{1A2}, SS_{1B2}, SS_{2A2}, SS_{2B2}, SS'₂₂), die geeignet sind, einen Anruf zu einem zweiten Anwendungsserver zu erstellen.

9. Servervorrichtung nach dem vorhergehenden Anspruch, **dadurch gekennzeichnet, dass** die Servervorrichtung Sitzungstransfermittel umfasst, die geeignet sind, die zweiten Verwaltungsmittel eines Anwendungsservers zu steuern, wobei die Steuerung der Transfermittel geeignet ist, die Verlagerung des Anrufs zu einem dritten Anwendungsserver durch die zweiten Verwaltungsmittel auszulösen.

10. Verfahren zum Anschluss einer ersten Ausrüstung an eine erste Dienstsitzung, **dadurch gekennzeichnet, dass** das Anschlussverfahren das Senden einer Einladung (INVITE) von der ersten Ausrüstung (UE A, UE B, UE C) an einen ersten Anwendungsserver umfasst, wobei die Einladung geeignet ist, die Erstellung einer ersten Anwendungssitzung (SAS 1, SAS 1A, SAS 1B, SAS 2A') mit der Ausrüstung zu ermöglichen, umfassend:
• eine erste statische Kommunikationssitzung (SS₁₁, SS_{1A1}, SS_{1B1}, SS'₂₁) mit der ersten Ausrüstung (UE A, UE B, UE C) und
• eine zweite dynamische Kommunikationssitzung (SS₁₂, SS_{1A2}, SS_{1B2}, SS'₂₂) mit einem zweiten Anwendungsserver, wobei der zweite Anwendungsserver geeignet ist, eine zweite Anwendungssitzung (SAS 2, SAS 2A, SAS 1B, SAS 2B, SAS 2A') mit einer zweiten Ausrüstung (S, UE B, UE C) zu ermöglichen.

11. Programm, umfassend Programmcodebefehle für die Ausführung der Schritte des Anschlussverfahrens nach dem vorhergehenden Anspruch, wenn das Programm von einem Prozessor ausgeführt wird.

12. Ausrüstung eines Kommunikationsnetzes, **dadurch gekennzeichnet, dass** die Ausrüstung (UE A, UE B, UE C, S) Anschlussmittel an eine Dienstsitzung umfasst, die geeignet sind, eine Einladung an einen ersten Anwendungsserver zu senden, wobei die Einladung geeignet ist, die Erstellung einer ersten Anwendungssitzung mit der Ausrüstung zu ermöglichen, umfassend:
• eine erste statische Kommunikationssitzung (SS₁₁, SS_{1A1}, SS_{2A1}, SS_{1B1}, SS_{2B1}, SS'₂₁) mit der ersten Ausrüstung (UE A, UE B, UE C, S) und
• eine zweite dynamische Kommunikationssitzung (SS₁₂, SS₂₁, SS₂₂, SS_{1A2}, SS_{2A2}, SS_{1B2}, SS_{2B2}, SS'₂₂) mit einem zweiten Anwendungsserver, wobei der zweite Anwendungsserver geeignet ist, eine zweite Anwendungssitzung (SAS 2, SAS 2A, SAS 1B, SAS 2B, SAS 2A') mit einer zweiten Ausrüstung (S, UE A, UE B, UE C) zu ermöglichen.

## Claims

1. Application session **characterized in that** said application session (SAS 1, SAS 2, SAS 1A, SAS 1B, SAS 2A, SAS 2B, SAS 2A') comprises a first (SS₁₁, SS₂₁, SS_{1A1}, SS_{1B1}, SS_{2A1}, SS_{2B1}, SS'₂₁) and a second communication session (SS₁₂, SS_{1A2}, SS_{1B2}, SS₂₂, SS_{2A2}, SS_{2B2}),
• the first communication session (SS₁₁, SS₂₁, SS_{1A1}, SS_{1B1}, SS_{2A1}, SS_{2B1}, SS'₂₁) being a static session with an equipment (UE A, S, UE B, UE C), and
• the second communication session (SS₁₂, SS₂₂, SS_{1A2}, SS_{1B2}, SS_{2A2}, SS_{2B2}, SS'₂₂) being a dynamic session, said dynamic session being able to allow a call to a second communication session (SS₂₂, SS₁₂, SS_{2A2}, SS_{1B2}, SS_{2B2}, SS_{1A2}) of a second application session (SAS 2, SAS2A, SAS 2B, SAS 1, SAS 1A, SAS 1B).

2. Service session comprising a first (SAS 1, SAS 1A, SAS 1B) and a second (SAS 2, SAS 2A, SAS 1B, SAS 2B, SAS 2A') application session according to the preceding claim,
• the first communication session (SS₁₁, SS_{1A1}, SS_{1B1}) of the first application session (SAS 1, SAS 1A, SAS 1B) being connected to a first equipment (UE A, UE B) and
• the first communication session (SS₂₁, SS_{2A1}, SS_{2B1} SS_{1B1}, SS'₂₁) of the second application session (SAS 2, SAS 2A, SAS 1B, SAS 2B) being connected to a second equipment (S, UE B, UE C) .

3. Method of establishment of an application session with a first equipment (UE A, UE B) of a communication network, **characterized in that** said method of establishment comprises the reception of an invitation (INVITE) by a first application server, said invitation being able to allow the establishment by said first application server of a first application session (SAS 1, SAS 1A, SAS 1B) comprising:
• a first static communication session (SS₁₁, SS_{1A1}, SS_{1B1}) with said first equipment (UE A, UE B) and
• a second dynamic communication session (SS₁₂, SS_{1A2}, SS_{1B2}) able to allow a call to a second communication session (SS₂₂, SS_{2A2}, SS_{1B2}, SS_{2B2}, SS'₂₂) of a second application session (SAS 2, SAS 2A, SAS 1B, SAS 2B, SAS 2A').

4. Program comprising program code instructions for the execution of the steps of the method of application session establishment according to the preceding claim when said program is executed by a processor.

5. Method of management of a service session with a first equipment (UE A, UE B, UE C) of a communication network, **characterized in that** said method of management comprises the reception of an invitation (INVITE) by a first application server, said invitation being able to allow the establishment by said application server of a first application session (SAS 1, SAS 1A, SAS 1B, SAS 2A') with a first equipment comprising:
• a first static communication session (SS₁₁, SS_{1A1}, SS_{1B1}, SS'₂₁) with said first equipment (UE A, UE B, UE C) and
• a second dynamic communication session (SS₁₂, SS_{1A2}, SS_{1B2}, SS'₂₂) with a second application server, said second application server being able to establish a second application session (SAS 2, SAS 2A, SAS 1B, SAS 2B, SAS 2A') with a second equipment (S, UE B, UE C).

6. Method of management according to the preceding claim, **characterized in that** said method of management comprises the reception of a new invitation (INVITE) of a third application server by said first application server, said new invitation being able to allow, after disconnection (BYE) of the second dynamic communication session of said second application server, the connection of said second dynamic communication session with said third application server, said third server being able to establish a second application session (SAS 2A') with a third equipment (UE C).

7. Program comprising program code instructions for the execution of the steps of the method of service session management according to either one of Claims 5 and 6 when said program is executed by a processor.

8. Application server device **characterized in that** said application server device comprises means of management of an application session (SAS 1, SAS 2, SAS 1A, SAS 1B, SAS 2A, SAS 2A'), said means management comprising:
• first means of management of a static communication session (SS₁₁, SS₂₁, SS_{1A1}, SS_{1B1}, SS_{2A1}, SS_{2B1}, SS'₂₁) able to be connected to a first equipment (UE A, S, UE B, UE C),
• second means of management of a dynamic communication session (SS₁₂, , SS₂₂, SS_{1A2}, SS_{1B2}, SS_{2A2}, SS_{2B2}, SS'₂₂) able to establish a call to a second application server.

9. Server device according to the preceding claim, **characterized in that** said server device comprises session transfer means able to control said second means of management of an application server, said control of the transfer means being able to trigger the movement by said second means of management of said call to a third application server.

10. Method of connection of a first equipment to a service session, **characterized in that** said method of connection comprises the sending of an invitation (INVITE) of said first equipment (UE A, UE B, UE C) to a first application server, said invitation being able to allow the establishment of a first application session (SAS 1, SAS 1A, SAS 1B, SAS 2A') with said equipment comprising:
• a first static communication session (SS₁₁, SS_{1A1}, SS_{1B1}, SS'₂₁) with said first equipment (UE A, UE B, UE C) and
• a second dynamic communication session (SS₁₂, SS_{1A2}, SS_{1B2}, SS'₂₂) with a second application server, said second application server being able to establish a second application session (SAS 2, SAS 2A, SAS 1B, SAS 2B, SAS 2A') with a second equipment (S, UE B, UE C).

11. Program comprising program code instructions for the execution of the steps of the method of connection according to the preceding claim when said program is executed by a processor.

12. equipment of a communication network **characterized in that** said equipment (UE A, UE B, UE C, S) comprises means of connection to a service session able to send an invitation to a first application server, said invitation being able to allow the establishment of a first application session with said equipment comprising:
• a first static communication session (SS₁₁, SS₂₁, SS_{1A1}, SS_{2A1}, SS_{1B1}, SS_{2B1}, SS'₂₁) with said first equipment (UE A, UE B, UE C, S) and
• a second dynamic communication session (SS₁₂, SS₂₂, SS_{1A2}, SS_{2A2}, SS_{1B2}, SS_{2B2}, SS'₂₂) with a second application server, said second application server being able to establish a second application session (SAS 2, SAS 2A, SAS 1B, SAS 2B, SAS 2A') with a second equipment (S, UE A, UE B, UE C) .
